# EUROPEAN PATENT APPLICATION

(11) **EP 3 252 087 A1**
(43) Date of publication of application: **06.12.2017**
(21) Application number: 16743418.2
(22) Date of filing: 27.01.2016
(51) Int. Cl.: C08F 220/16, C08F 220/34, C09J 4/02, C09J 4/06, C09J 5/00, C09J 7/00, C09J 133/06, C09J 157/00

(54) **COMPOSITION FOR FORMING EASY-TO-DETACH THIN RESIN FILM, AND EASY-TO-DETACH THIN RESIN FILM**

(30) Priority: 27.01.2015 JP 2015013764; 24.04.2015 JP 2015089291
(71) Applicant: Nissan Chemical Industries, Ltd., Chiyoda-ku Tokyo 101-0054 (JP)
(72) Inventor: SATO, Tetsuo, Funabashi-shi Chiba 274-0052 (JP)
(74) Representative: Hoffmann Eitle
(86) International application number: PCT/JP2016/052328
(87) International publication number: WO 2016/121815

(57) **Abstract**

The invention provides a composition for forming an easy-to-detach thin resin film, the composition being characterized by including a urethane (meth)acrylate compound, and a first polymerizable composition containing an ethylenic unsaturated monomer having a tert-butoxy group and a radical polymerization initiator, or a polymer of a second polymerizable composition containing the ethylenic unsaturated monomer having a tert-butoxy group, wherein the amount of the ethylenic unsaturated monomer having a tert-butoxy group is 5 mass% or more and less than 95 mass% with respect to the sum of the amount of the urethane (meth)acrylate compound and the total amount of the monomer(s) contained in the first polymerizable composition or the second polymerizable composition.

## Description

### Technical Field

The present invention relates to a composition for forming an easy-to-detach thin resin film (interchangeable with resin thin film), and to an easy-to-detach thin resin film.

### Background Art

During processing (e.g., dicing or backgrinding) of a substrate (e.g., a semiconductor wafer) or transfer of the substrate (e.g., transfer from an apparatus to another apparatus), the substrate needs to be temporarily fixed to a support by means of, for example, a temporary fixing material so as to prevent slipping of the substrate from the support. After the processing or the transfer, the substrate is required to be removed (or peeled) from the substrate. Hitherto, a thermosoftening resin (e.g., liquid rosin wax) has been used as a material for temporary fixation of such a substrate (Patent Document 1).

In recent years, many resins for temporary fixation have been proposed, in order to facilitate removal of a substrate. Such a resin exhibits a drastic reduction in adhesive force when heated to a specific range of temperature.

For example, reported techniques involve the use of a mixture of polyethersulfone, a tackifier, and a solvent (Patent Document 2); the use of a copolymer of a crosslinked cyclic acrylate, a polar-group-containing non-crosslinked cyclic vinyl compound, and a polyfunctional vinyl compound (Patent Document 3); and the use of an epoxy resin containing an organic azide compound (Patent Document 4).

Other reported techniques involve the incorporation of a thermally expandable capsule into a non-removable adhesive for imparting removability (or peelability) to the adhesive (Patent Document 5); the incorporation of an azide compound into a non-removable adhesive for providing the adhesive with removability through gas generation caused by an external stimulus (Patent Document 6); and the introduction of an acetal group into a phenyl group of a resin for imparting thermal decomposability to the resin (Patent Document 7).

### Prior Art Documents

### Patent Documents

Patent Document 1: Japanese Patent Application Laid-Open (*kokai*) No. 2014-144500
Patent Document 2: Japanese Patent Application Laid-Open *(kokai)* No. 2011-225814
Patent Document 3: Japanese Patent Application Laid-Open (*kokai*) No. 2014-7412
Patent Document 4: Japanese Patent Application Laid-Open *(kokai)* No. 2007-145964
Patent Document 5: Japanese Patent Application Laid-Open (*kokai*) No. 2007-106963
Patent Document 6: Japanese Patent Application Laid-Open *(kokai)* No. 2004-186201
Patent Document 7: Japanese Patent Application Laid-Open *(kokai)* No. 2006-206650

### Non-Patent Document

Non-Patent Document 1: N-28 Photopolymerization of t-butyl acrylate, Proceedings of the 2012FY/56th Science Lecture Meeting of the College of Science and Technology, Nihon University

### Summary of the Invention

### Problems to be Solved by the Invention

As described above, various techniques have been reported for reducing the adhesion of a thin resin film, thereby facilitating the removal of the resin film. In addition, a resin which has a tert-butoxy group and generates a gas by decomposition under acidic conditions has been reported as a candidate material for providing a thin resin film with removability through gas generation caused by an external stimulus (Non-Patent Document 1).

The present inventor has focused on this candidate material for development of a new material, and has concluded that a composition containing, as a resin component, a polymer composed only of a monomer unit derived from a tert-butyl acrylate described in the non-patent document can form only a thin resin film exhibiting no removability even in the presence of an external stimulus.

An object of the present invention is to provide a composition for forming an easy-to-detach thin resin film exhibiting practically acceptable removability by an external stimulus, the composition containing, for example, an ethylenic unsaturated monomer having a tert-butoxy group. Another object of the present invention is to provide such an easy-to-detach thin resin film.

### Means for Solving the Problems

The present inventor has conducted extensive studies for solving the aforementioned problems, and as a result has found that addition of, for example, a urethane (meth)acrylate compound to a composition containing tert-butyl acrylate is required for forming, from the composition, a thin resin film which has adhesion, exhibits removability by an external stimulus, and is suitable for use as a temporary adhesive film or a temporary protective film. Specifically, the present inventor has developed a composition comprising a first polymerizable composition containing an ethylenic unsaturated monomer having a tert-butoxy group and a radical polymerization initiator, or a polymer of a second polymerizable composition containing the ethylenic unsaturated monomer having a tert-butoxy group; and a urethane (meth)acrylate compound, wherein the amount of the ethylenic unsaturated monomer having a tert-butoxy group is adjusted to fall within a specific range with respect to the total mass of the first polymerizable composition or the second polymerizable composition and the urethane (meth)acrylate compound. The inventor has found that a thin resin film formed from the composition decomposes by an external stimulus (e.g., heating), and the resultant film exhibits reduced adhesion to, for example, a substrate and can be readily removed therefrom. The present invention has been accomplished on the basis of this finding.

Accordingly, the present invention provides:
1. a composition for forming an easy-to-detach thin resin film, the composition being characterized by comprising a urethane (meth)acrylate compound, and a first polymerizable composition containing an ethylenic unsaturated monomer having a tert-butoxy group and a radical polymerization initiator, or a polymer of a second polymerizable composition containing the ethylenic unsaturated monomer having a tert-butoxy group, wherein the amount of the ethylenic unsaturated monomer having a tert-butoxy group is 5 mass% or more and less than 95 mass% with respect to the sum of the amount of the urethane (meth)acrylate compound and the total amount of the monomer(s) contained in the first polymerizable composition or the second polymerizable composition;
2. a composition for forming an easy-to-detach thin resin film according to 1, wherein the ethylenic unsaturated monomer having a tert-butoxy group contains at least one species selected from the group consisting of compounds represented by the following formulae (T1) to (T3): 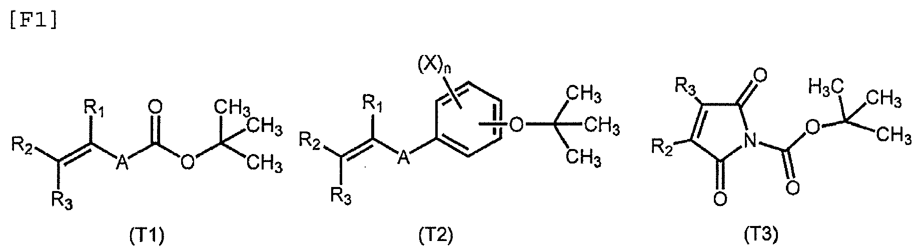 (where R₁ represents a hydrogen atom, a cyano group, a methyl group, an ethyl group, an n-propyl group, or an isopropyl group; R₂ and R₃ each independently represent a hydrogen atom or a C1 to C10 alkyl group; A represents a single bond, an ether group (-O-), a carbonyl group (-CO-), an amido group (-CONH-), a C1 to C12 alkylene group, a C6 to C16 arylene group, or a C3 to C12 heteroarylene group; X represents a halogen atom, a cyano group, a nitro group, a C1 to C10 alkyl group, or a C1 to C10 haloalkyl group; and n is an integer from 0 to 4, which corresponds to the number of substituents X on the benzene ring);
3. a composition for forming an easy-to-detach thin resin film according to 1, wherein the ethylenic unsaturated monomer having a tert-butoxy group contains tert-butyl (meth)acrylate;
4. a composition for forming an easy-to-detach thin resin film according to any of 1 to 3, wherein the radical polymerization initiator is a radiation radical polymerization initiator;
5. a composition for forming an easy-to-detach thin resin film according to any of 1 to 4, which further comprises an acid generator;
6. a composition for forming an easy-to-detach thin resin film according to 5, wherein the acid generator is a thermal acid generator;
7. a composition for forming an easy-to-detach thin resin film according to any of 1 to 6, wherein the amount of the ethylenic unsaturated monomer having a tert-butoxy group is 60 mol% or more with respect to the total amount of the ethylenic unsaturated monomer having a tert-butoxy group and the additional ethylenic unsaturated monomer;
8. a composition for forming an easy-to-detach thin resin film according to 7, wherein the first polymerizable composition or the second polymerizable composition further contains an additional ethylenic unsaturated monomer in addition to the ethylenic unsaturated monomer having a tert-butoxy group.
9. an easy-to-detach thin resin film produced from a composition for forming an easy-to-detach thin resin film as recited in any of 1 to 8;
10. an adhesive film comprising an easy-to-detach thin resin film as recited in 9;
11. an article comprising an adhesive film as recited in 10;
12. a substrate laminate comprising two substrates, and an adhesive film as recited in 10 disposed between the substrates;
13. a method for bonding two or more articles with an adhesive film as recited in 10;
14. a protective film comprising an easy-to-detach thin resin film as recited in 9;
15. an article comprising a protective film as recited in 14; and
16. a method for protecting the surface of an article with a protective film as recited in 14.

### Effects of the Invention

The easy-to-detach thin resin film produced from the composition for forming an easy-to-detach thin resin film of the present invention exhibits chemical protection performance against, for example, water, an alkali, or an acid and physical protection performance against, for example, scratching, since the composition contains an ethylenic unsaturated monomer having a tert-butoxy group or a polymer of the monomer and a urethane (meth)acrylate compound. The easy-to-detach thin resin film exhibits adhesion to an article (e.g., a glass substrate) (hereinafter such an article may be referred to as a "coating target") and can be removed from the coating target by an external stimulus (e.g., heat or light), since the composition contains the ethylenic unsaturated monomer having a tert-butoxy group in a specific amount as described above. In particular, when the easy-to-detach thin resin film of the present invention is formed on a coating target in the absence of, for example, a shield on the film, the film can be self-removed from the coating target through, for example, curling by an external stimulus.

As described above, the easy-to-detach thin resin film of the present invention exhibits high adhesion to a coating target (e.g., a substrate) and can be removed therefrom by an external stimulus (e.g., photoirradiation or heating) after accomplishment of its purpose. Thus, the easy-to-detach thin resin film is particularly expected to be used as a temporary adhesive film for temporarily fixing two articles (e.g., substrates) or a temporary protective film for temporarily protecting the surface of an article.

By virtue of its characteristics, the easy-to-detach thin resin film produced from the composition for forming an easy-to-detach thin resin film of the present invention is particularly suitable for use as a temporary adhesive film or a temporary protective film. However, the easy-to-detach thin resin film may be used not for temporary adhesion or temporary protection, but for permanent adhesion or permanent protection.

The easy-to-detach thin resin film produced from the composition for forming an easy-to-detach thin resin film of the present invention is not easily removable, so long as an external stimulus is not applied to the film. Thus, the film is assumed to be used for permanent adhesion or permanent protection without application of an external stimulus, and the present invention does not exclude the use of the film for such a purpose.

### Brief description of the Drawings

[Fig. 1] A schematic illustration of a process for producing a cured film and a glass laminate in Examples 1 to 17 and Comparative Examples 1 to 7.
[Fig. 2] A schematic illustration of a process for forming an ITO film on a glass laminate in Examples 1 to 5.

### Modes for Carrying Out the Invention

The present invention will next be described in more detail.

The composition for forming an easy-to-detach thin resin film (hereinafter may be referred to simply as the "composition") of the present invention contains a first polymerizable composition containing an ethylenic unsaturated monomer having a tert-butoxy group and a radical polymerization initiator, or a polymer of a second polymerizable composition containing the ethylenic unsaturated monomer having a tert-butoxy group.

In the present invention, the ethylenic unsaturated monomer having a tert-butoxy group includes a group represented by formula (1) in the molecule. Elimination reaction (gas generation reaction) occurs at the tert-butoxy group by means of heat or an acid generated from an acid generator through photoirradiation or heating. Consequently, a thin resin film produced from the composition is decomposed. The thin resin film, which initially has high adhesion, exhibits reduced adhesion through decomposition, and becomes an easily removable state.

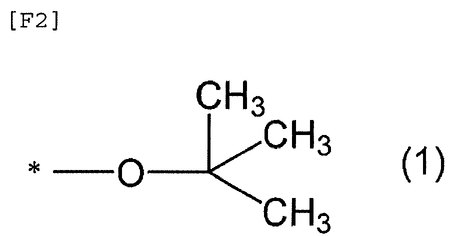

(where * represents a dangling bond.)

The group represented by formula (1) may be directly bonded to a carbon atom of an ethylenic unsaturated bond of the monomer containing the group, or may be indirectly bonded to the carbon atom via another atom or another group.

In the present invention, the ethylenic unsaturated monomer having a tert-butoxy group is preferably, for example, an ethylenic unsaturated monomer represented by any of the following formulae (T1) to (T3).

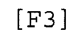

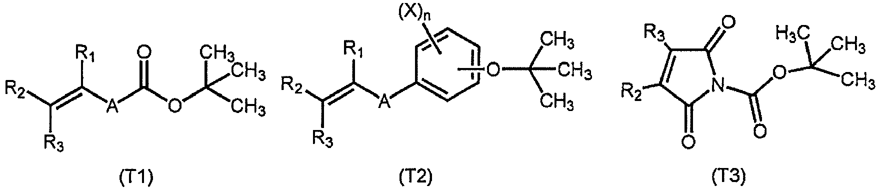

In formulae (T1) and (T2), R₁ represents a hydrogen atom, a cyano group, a methyl group, an ethyl group, an n-propyl group, or an isopropyl group. In particular, a hydrogen atom or a methyl group is preferred in view of easy availability of the compound or a raw material for the compound.

In formulae (T1) to (T3), R₂ and R₃ each independently represent a hydrogen atom or a C1 to C10 alkyl group.

The C1 to C10 alkyl group may be in a linear, branched, or cyclic form. Examples of the alkyl group include C1 to C10 linear and branched alkyl groups, such as methyl, ethyl, n-propyl, isopropyl, n-butyl, isobutyl, sec-butyl, tert-butyl, n-pentyl, n-hexyl, n-heptyl, n-octyl, n-nonyl, and n-decyl; and C3 to C10 cyclic alkyl groups, such as cyclopropyl, cyclobutyl, cyclopentyl, cyclohexyl, cycloheptyl, cyclooctyl, cyclononyl, cyclodecyl, bicyclobutyl, bicyclopentyl, bicyclohexyl, bicycloheptyl, bicyclooctyl, bicyclononyl, and bicyclodecyl.

In view of easy availability of the compound or a raw material for the compound, each of R₂ and R₃ is preferably a hydrogen atom or a C1 to C10 linear alkyl group, more preferably a hydrogen atom, a methyl group, or an ethyl group, still more preferably a hydrogen atom or a methyl group, much more preferably a hydrogen atom.

In formulae (T1) and (T2), A represents a single bond, an ether group (-O-), a carbonyl group (-CO-), an amido group (-CONH-), a C1 to C12 alkylene group, a C6 to C16 arylene group, or a C3 to C12 heteroarylene group.

The C1 to C12 alkylene group is prepared through elimination of one hydrogen atom from a C1 to C12 alkyl group. Specific examples of the alkyl group include those described above.

Specific examples of the C1 to C12 alkylene group include, but are not limited to, methylene, ethylene, trimethylene, 2,2-propanediyl, tetramethylene, pentamethylene, hexamethylene, heptamethylene, octamethylene, nonamethylene, and decamethylene.

The C6 to C16 arylene group is prepared through elimination of two hydrogen atoms from a C6 to C16 aryl. Examples of the aryl include benzene, naphthalene, and anthracene.

Specific examples of the C6 to C16 arylene group include, but are not limited to, o-phenylene, m-phenylene, p-phenylene, naphthalene-1,2-diyl, naphthalene-1,3-diyl, naphthalene-1,4-diyl, naphthalene-1,5-diyl, naphthalene-1,6-diyl, naphthalene-1,7-diyl, naphthalene-1,8-diyl, naphthalene-2,3-diyl, naphthalene-2,6-diyl, and naphthalene-2,7-diyl.

The C3 to C12 heteroarylene group is prepared through elimination of two hydrogen atoms from a heteroaryl. Examples of the heteroaryl include oxygen-containing heteroaryls, such as furan; sulfur-containing heteroaryls, such as thiophene; and nitrogen-containing heteroaryls, such as pyridine, triazine, and imidazole.

Specific examples of the C3 to C12 heteroarylene group include, but are not limited to, furan-2,3-diyl, furan-2,4-diyl, furan-2,5-diyl, furan-3,4-diyl, thiophene-2,3-diyl, thiophene-2,4-diyl, thiophene-2,5-diyl, thiophene-3,4-diyl, imidazole-2,4-diyl, imidazole-4,5-diyl, pyridine-2,3-diyl, pyridine-2,4-diyl, pyridine-2,5-diyl, pyridine-2,6-diyl, pyridine-3,4-diyl, pyridine-3,5-diyl, and triazine-2,4-diyl.

In view of easy availability of the compound or a raw material for the compound, A is preferably a single bond, an ether group, a carbonyl group, an amido group, a C1 to C8 alkylene group, or a C6 to C12 arylene group, more preferably a single bond, an ether group, a carbonyl group, an amido group, a C1 to C4 alkylene group, an o-phenylene group, an m-phenylene group, or a p-phenylene group, much more preferably a single bond, an ether group, a carbonyl group, an amido group, a methylene group, an ethylene group, a trimethylene group, a 2,2-propanediyl group, an m-phenylene group, or a p-phenylene group. For improvement of the gas generation ability of the compound, A is preferably a single bond, an ether group, or a carbonyl group.

In formula (T2), the tert-butoxy group and A are preferably in para-position to each other.

In formula (T2), X represents a substituent on the benzene ring; specifically, a halogen atom, a cyano group, a nitro group, a C1 to C10 alkyl group, or a C1 to C10 haloalkyl group.

Examples of the halogen atom include fluorine, chlorine, and bromine.

Examples of the C1 to C10 haloalkyl group include trifluoromethyl, 2,2,2-trifluoroethyl, 1,1,2,2,2-pentafluoroethyl, 3,3,3-trifluoropropyl, 2,2,3,3,3-pentafluoropropyl, 1,1,2,2,3,3,3-heptafluoropropyl, 4,4,4-trifluorobutyl, 3,3,4,4,4-pentafluorobutyl, 2,2,3,3,4,4,4-heptafluorobutyl, and 1,1,2,2,3,3,4,4,4-nonafluorobutyl.

Specific examples of the C1 to C10 alkyl group include the same as those described above.

In formula (T2), n is an integer from 0 to 4, which corresponds to the number of substituents on the benzene ring.

In view of easy availability of the compound or a raw material for the compound, X is preferably a halogen atom, a cyano group, a nitro group, a methyl group, an ethyl group, a propyl group, an isopropyl group, a halomethyl group, a haloethyl group, a halopropyl group, or a haloisopropyl group, more preferably a halogen atom, a cyano group, a nitro group, a methyl group, an ethyl group, a halomethyl group, or a haloethyl group. In formula (T2), n is preferably 0 to 2, more preferably 0 or 1, most preferably 0.

Specific examples of the ethylenic unsaturated monomer having a tert-butoxy group include, but are not limited to, tert-butyl (meth)acrylate, N-(tert-butoxycarbonyl)(meth)acrylamide, 4-tert-butoxystyrene, tert-butyl 4-vinylphenyl carbonate, tert-butyl (4-vinylphenyl)carbamate, tert-butoxycarbonyl (meth)acrylate, N-(tert-butoxycarbonyl)maleimide, and 2-(tert-butoxycarbonylamino)ethyl acrylate.

In the present invention, the first polymerizable composition or the second polymerizable composition may contain an additional ethylenic unsaturated monomer besides the ethylenic unsaturated monomer having a tert-butoxy group. The additional ethylenic unsaturated monomer besides the ethylenic unsaturated monomer having a tert-butoxy group is an ethylenic unsaturated monomer not having the group represented by the aforementioned formula (1); for example, a mono-functional (meth)acrylate not having the group represented by the aforementioned formula (1), or a ≥2-functional (meth)acrylate not having the group represented by the aforementioned formula (1).

The mono-functional (meth)acrylate is suitably an mono-functional alkyl (meth)acrylate, with an mono-functional alkyl (meth)acrylate having a C≥6 alkyl group being more preferred.

The alkyl group may be any of linear, branched, and cyclic alkyl groups. Examples of the alkyl group include C1 to C20 linear or branched alkyl groups such as methyl, ethyl, n-propyl, isopropyl, n-butyl, isobutyl, sec-butyl, n-pentyl, n-hexyl, n-heptyl, n-octyl, n-nonyl, and n-decyl; and C3 to C20 cycloalkyl groups such as cyclopropyl, cyclobutyl, cyclopentyl, cyclohexyl, cycloheptyl, cyclooctyl, cyclononyl, cyclodecyl, bicyclobutyl, bicyclopentyl, bicyclohexyl, bicycloheptyl, bicyclooctyl, bicyclononyl, and bicyclodecyl.

Specific examples of the mono-functional alkyl (meth)acrylate having a C≥6 alkyl group include hexyl (meth)acrylate, 2-ethylhexyl (meth)acrylate, heptyl (meth)acrylate, octyl (meth)acrylate, isooctyl (meth)acrylate, nonyl (meth)acrylate, isononyl (meth)acrylate, decyl (meth)acrylate, isodecyl (meth)acrylate, dodecyl (meth)acrylate, stearyl (meth)acrylate, isostearyl (meth)acrylate, lauryl(meth) acrylate, cyclohexyl (meth)acrylate, isobornyl (meth)acrylate, isoamyl (meth)acrylate, dicyclopentenyl (meth)acrylate, and tricyclodecanyl (meth)acrylate.

Specific examples of the (meth)acrylate other than the mono-functional alkyl (meth)acrylate having a C≥6 alkyl group include methyl (meth)acrylate, ethyl (meth)acrylate , phenoxyethyl (meth)acrylate , glycerin mono(meth)acrylate , glycidyl (meth)acrylate, n-butyl (meth)acrylate, benzyl (meth)acrylate, ethylene oxide-modified (n=2) phenol (meth)acrylate, propylene oxide-modified (n=2.5) nonylphnenol (meth)acrylate, 2-(meth)acryloyloxyethyl acid phosphate, furfuryl (meth)acrylate, carbitol (meth)acrylate, benzyl (meth)acrylate, butoxyethyl (meth)acrylate, allyl (meth)acrylate, 2-hydroxyethyl (meth)acrylate, 2-hydroxypropyl (meth)acrylate, 2-hydroxybutyl (meth)acrylate, 2-phenoxy-2-hydroxypropyl (meth)acrylate, 2-hydroxy-3-phenoxypropyl (meth)acrylate, and 3-chloro-2-hydroxypropyl (meth)acrylate. Among them, those having no hydroxy group are preferred. The molecular weight thereof is preferably about 100 to about 300.

These mono-functional (meth)acrylates may be used singly or in combination of two or more species.

Of these, isodecyl (meth)acrylate, lauryl (meth)acrylate, cyclohexyl (meth)acrylate, isostearyl (meth)acrylate, and 2-ethylhexyl (meth)acrylate are preferred.

The ≥2-functional (meth)acrylate may be a bi-functional (meth)acrylate and a ≥3-functional (meth)acrylate.

Examples of the bi-functional (meth)acrylate include ethylene glycol di(meth)acrylate, diethylene glycol di(meth)acrylate, tetraethylene glycol di(meth)acrylate, poly(ethylene glycol) di(meth)acrylate, propylene glycol di(meth)acrylate, dipropylene glycol di(meth)acrylate, poly(propylene glycol) di(meth)acrylate, butylene glycol di(meth)acrylate, neopentyl glycol di(meth)acrylate, ethylene oxide-modified bisphenol A di(meth)acrylate, propylene oxide-modified bisphenol A di(meth)acrylate, 1,6-hexanediol di(meth)acrylate, glycerin di(meth)acrylate, pentaerythritol di(meth)acrylate, ethylene glycol diglycidyl ether di(meth)acrylate, diethylene glycol diglycidyl ether di(meth)acrylate, phthalate diglycidyl ester di(meth)acrylate, and hydroxypivalic acid-modified neopentylglycol di(meth)acrylate.

These poly-functional (meth)acrylates may be used singly or in combination of two or more species.

Examples of the ≥3-functional (meth)acrylate include trimethylolpropane tri(meth)acrylate, pentaerythritol tri(meth)acrylate, pentaerythritol tetra(meth)acrylate, dipentaerythritol penta(meth)acrylate, dipentaerythritol hexa(meth)acrylate, tri(meth)acryloyloxyethoxytrimethylolpropane, and glycerin polyglycidyl ether poly(meth)acrylate.

In the first polymerizable composition or the second polymerizable composition according to the present invention, the amount of the ethylenic unsaturated monomer having a tert-butoxy group is preferably 60 mol% or more, more preferably 70 mol% or more, still more preferably 80 mol% or more, still more preferably 90 mol% or more, much more preferably 95 mol% or more, most preferably 100 mol%, with respect to the total amount of the ethylenic unsaturated monomer having a tert-butoxy group and the additional ethylenic unsaturated monomer, for reproducible formation of a thin resin film exhibiting removability by an external stimulus (e.g., heating).

The first polymerizable composition or the second polymerizable composition according to the present invention contains a radical polymerization initiator for polymerizing the monomer(s) contained in the composition (i.e., the ethylenic unsaturated monomer having a tert-butoxy group and the optionally incorporated additional ethylenic unsaturated monomer). Examples of the radical polymerization initiator include a radiation radical polymerization initiator and a thermal radical polymerization initiator.

Specific examples of the radiation radical polymerization initiator include α-diketones such as diacetyl; acyloins such as benzoin; acyloin ethers such as benzoin methyl ether, benzoin ethyl ether, and benzoin isopropyl ether; benzophenones such as thioxanthone, 2,4-diethylthioxanthone, thioxanthone-4-sulfonic acid, benzophenone, 4,4'-bis(dimethylamino)benzophenone, and 4,4'-bis(diethylamino)benzophenone; and acetophenones such as acetophenone, p-dimethylaminoacetophenone, α,α-dimethoxy-α-acetoxyacetophenone, α,α-dimethoxy-α-phenylacetophenone, p-methoxyacetophenone, 2-methyl-1-(4-methylthiophenyl)-2-morpholinopropan-1-one, 1-[2-methyl-4-methylthiophenyl]-2-morpholino-1-propanone, 2-hydroxy-2-methyl-1-phenylpropan-1-one, 1-hydroxycyclohexyl phenyl ketone, α,α-dimethoxy-α-morpholinomethylthiophenylacetophenone, and 2-benzyl-2-dimethylamino-1-(4-morpholinophenyl)-butan-1-one; quinones such as anthraquinone and 1,4-naphthoquinone; halogen compounds such as phenacyl chloride, tribromomethylphenyl sulfone, and tris(trichloromethyl)-s-triazine; bisimidazoles such as [1,2'-bisimidazole]-3,3',4,4'-tetraphenyl, and [1,2'-bisimidazole]-1,2'-dichlorophenyl-3,3',4,4'-tetraphenyl; peroxides such as di-tert-butyl peroxide; acylphosphine oxides such as diphenyl(2,4,6-trimethylbenzoyl)phosphine oxide; and p-dimethylaminobenzoate esters such as ethyl p-dimethylaminobenzoate.

The radiation radical polymerization initiator may be a commercial product, and examples thereof include, but are not limited to, IRGACURE (registered trademark) 651, 184, 2959, 127, 907, 369, 379EG, 819, and TPO, DAROCUR (registered trademark) 1173 and MBF (products of BASF Japan), and KAYACURE DETX-S and EPA (products of Nippon Kayaku Co., Ltd.).

Examples of the thermal radical polymerization initiator include a peroxide, an azo compound, and a redox initiator.

Specific examples of the peroxide include tert-butyl(3,5,5-trimethylhexanoyl) peroxide, tert-butyl hydroperoxide, cumene hydroperoxide, tert-butyl peroxyacetate, tert-butyl peroxybenzoate, tert-butyl peroxyoctanoate, tert-butyl peroxyneodecanate, tert-butyl peroxyisobutyrate, lauroyl peroxide, tert-amyl peroxypivalate, tert-butyl peroxypivalate, dicumyl peroxide, benzoyl peroxide, potassium persulfate, and ammonium persulfate.

Specific examples of the azo compound include dimethyl 2,2'-azobis(2-methylpropionate), 2,2'-azobis(isobutyronitrile), 2,2'-azobis(2-butanenitrile), 4,4'-azobis(4-pentanoic acid), 1,1'-azobis(cyclohexanecarbonitrile), 2-(tert-butylazo)-2-cyanopropane, 2,2'-azobis(N,N'-dimethyleneisobutylamidine) dichloride, 2,2'-azobis(2-amidinopropane) dichloride, 2,2'-azobis(N,N-dimethyleneisobutylamide), 2,2'-azobis(2-methyl-N-[1,1-bis(hydroxymethyl)-2-hydroxyethyl]proionamide), 2,2'-azobis(2-methyl-N-[1,1-bis(hydroxymethyl)ethyl]proionamide), 2,2'-azobis[2-methyl-N-(2-hydroxyethyl)proionamide), and 2,2'-azobis(isobutylamide) dihydrate.

Specific examples of the redox initiator include mixtures of hydrogen peroxide, an alkyl peroxide, a peroxide ester, and a percarbonate salt, with an iron salt, titanous salt, zinc formaldehyde sulfoxylate, sodium formaldehyde sulfoxylate, a reducing sugar, etc. Examples also include mixtures of an alkali metal persulfate, perborate, or perchlorate, or an ammonium perchlorate, with an alkali metal bisulfite (e.g., sodium metabisulfite) or a reducing sugar. Examples also include mixtures of an alkali metal persulfate, with a similar acid such as an arylsulfonic acid (e.g., benzenesulfonic acid) or a reducing sugar.

Examples of commercially available products of the thermal radical polymerization initiator include PERHEXA (registered trademark) HC (manufactured by NOF Corporation) and MAIB (manufactured by Tokyo Chemical Industry Co., Ltd.).

These radical polymerization initiators may be used singly or in combination of two or more species.

In the first polymerizable composition or the second polymerizable composition according to the present invention, the amount of the radical polymerization initiator is generally 1 to 30 parts by mass, preferably 5 to 25 parts by mass, more preferably 7.5 to 22.5 parts by mass, with respect to 100 parts by mass of the total amount of the ethylenic unsaturated monomer having a tert-butoxy group and the additional ethylenic unsaturated monomer.

The composition of the present invention contains the first polymerizable composition or a polymer (including a copolymer, the same shall apply hereinafter) of the second polymerizable composition.

The second polymerizable composition contains the radical polymerization initiator, and only the ethylenic unsaturated monomer having a tert-butoxy group or both the ethylenic unsaturated monomer having a tert-butoxy group and the additional ethylenic unsaturated monomer. The polymer of the second polymerizable composition can be prepared through polymerization of the composition in an appropriate solvent.

The solvent may be of any type that is generally used for such a reaction. Specific examples of the solvent include water; alcohols, such as methanol, ethanol, 1-propanol, 2-propanol, 1-butanol, 2-butanol, isobutyl alcohol, tert-butyl alcohol, 1-pentanol, 2-pentanol, 3-pentanol, isopentyl alcohol, tert-pentyl alcohol, 1-hexanol, 1-heptanol, 2-heptanol, 3-heptanol, 2-octanol, 2-ethyl-1-hexanol, benzyl alcohol, and cyclohexanol; ethers, such as diethyl ether, diisopropyl ether, dibutyl ether, cyclopentyl methyl ether, tetrahydrofuran, and 1,4-dioxane; halogenated hydrocarbons, such as chloroform, dichloromethane, dichloroethane, and carbon tetrachloride; ether alcohols, such as methyl cellosolve, ethyl cellosolve, isopropyl cellosolve, butyl cellosolve, and diethylene glycol monobutyl ether; ketones, such as acetone, methyl ethyl ketone, methyl isobutyl ketone, and cyclohexanone; esters, such as ethyl acetate, butyl acetate, ethyl propionate, and cellosolve acetate; aliphatic and aromatic hydrocarbons, such as n-pentane, n-hexane, n-heptane, n-octane, n-nonane, n-decane, cyclopentane, methylcyclopentane, cyclohexane, methylcyclohexane, benzene, toluene, xylene, ethylbenzene, and anisole; acetals, such as methylal and diethylacetal; fatty acids, such as formic acid, acetic acid, and propionic acid; nitropropane; nitrobenzene; dimethylamine; monoethanolamine; pyridine; N-methyl-2-pyrrolidone; N,N-dimethylformamide; dimethyl sulfoxide; and acetonitrile. A solvent to be used is appropriately selected from these solvents in consideration of, for example, the type or amount of a monomer or an initiator, or the reaction temperature.

The composition of the present invention may be prepared by addition of the below-described urethane (meth)acrylate compound and an acid generator to a solution prepared by dissolving, in a good solvent, a polymer isolated from the polymerization mixture obtained through the polymerization reaction, the polymerization mixture used as is, or a solution prepared through dilution or concentration of the polymerization mixture. In the present invention, even in such a case, the amount of the ethylenic unsaturated monomer having a tert-butoxy group needs to be adjusted to fall within the aforementioned specific range.

The polymer of the second polymerizable composition generally has a weight average molecular weight of 500 to 200,000. In order to prevent an excessive increase in viscosity of the composition and to secure the applicability of the composition, the weight average molecular weight is preferably 100,000 or less, more preferably 50,000 or less, still more preferably 25,000 or less. The weight average molecular weight is determined in terms of polystyrene by means of gel permeation chromatography (GPC) (the same shall apply hereinafter).

The composition of the present invention contains a urethane (meth)acrylate compound. The urethane (meth)acrylate compound is produced through reaction between (a) a polyol, (b) a polyisocyanate, and (c) a (meth)acrylate compound having a hydroxy group. The urethane (meth)acrylate compound has a (meth)acryloyl group at the end of the urethane skeleton. The urethane (meth)acrylate compound generally has a weight average molecular weight of 300 to 30,000.

No particular limitation is imposed on the polyol (a) used for the production of the urethane (meth)acrylate compound. The polyol is preferably at least one species selected from the group consisting of poly(oxyalkylene glycol)s and polyolefin polyols. Such a polyol, which has low crystallinity, can contribute to reproducible formation of a cured film exhibiting both flexibility and toughness.

The poly(oxyalkylene glycol) is also called polyether polyol. The poly(oxyalkylene glycol) preferably has a C2 to C4 alkylene moiety. The poly(oxyalkylene glycol) may be poly(ethylene glycol), poly(propylene glycol), poly(butylene glycol), poly(tetramethylene glycol), or a copolymer of two or more species thereof; for example, a copolymer of ethylene oxide and propylene oxide.

In particular, poly(butylene glycol) or poly(tetramethylene glycol) is preferred, since it provides the resultant cured film with flexibility and toughness and exhibits low water absorbability.

The polyolefin polyol, which has a polyolefin skeleton in the molecule, may be, for example, polyethylene diol, polyethylene triol, polyethylene tetraol, polypropylene diol, polypropylene triol, polypropylene tetraol, or a copolymer thereof.

Such a polyolefin polyol can be produced through hydrogenation of, for example, 1,2-polybutadiene, 1,4-polybutadiene, or polyisoprene having a hydroxy group at the molecular end. In this case, the percent hydrogenation is preferably 50% or more.

The polyisocyanate compound (b) may be, for example, an aromatic, aliphatic chain, or aliphatic cyclic polyisocyanate.

Specific examples of the polyisocyanate compound include diisocyanates, such as tolylene diisocyanate, diphenylmethane diisocyanate, hydrogenated diphenylmethane diisocyanate, modified diphenylmethane diisocyanate, hydrogenated xylylene diisocyanate, xylylene diisocyanate, hexamethylene diisocyanate, trimethylhexamethylene diisocyanate, tetramethylxylylene diisocyanate, isophorone diisocyanate, norbornene diisocyanate, 1,3-bis(isocyanatomethyl)cyclohexane, benzene diisocyanate, naphthalene diisocyanate, and anthracene diisocyanate; trimers thereof; and biuret polyisocyanates.

In particular, an aromatic diisocyanate is preferred, and benzene diisocyanate is more preferred.

The (meth)acrylate compound having a hydroxy group (c) may be a hydroxyalkyl (meth)acrylate. The hydroxyalkyl group preferably has 1 to 20 carbon atoms, more preferably 2 to 10 carbon atoms, still more preferably 2 to 6 carbon atoms, in order to achieve high chemical resistance (hydrofluoric acid resistance) of the resultant thin film and appropriate adhesion of the thin film to a substrate.

Specific examples of the (meth)acrylate compound having a hydroxy group include 2-hydroxyethyl (meth)acrylate, 2-hydroxypropyl (meth)acrylate, 2-hydroxybutyl (meth)acrylate, 2-(meth)acryloyloxyethyl 2-hydroxypropyl phthalate, 4-hydroxybutyl (meth)acrylate, glycerin di(meth)acrylate, 2-hydroxy-3-acryloyloxypropyl (meth)acrylate, caprolactone-modified 2-hydroxyethyl (meth)acrylate, pentaerythritol tri(meth)acrylate, dipentaerythritol penta(meth)acrylate.

In the present invention, the urethane (meth)acrylate compound may be a commercially available product, or may be produced by any known method (e.g., the method described in Japanese Patent Application Laid-Open (*kokai*) No. 2004-143233, S60-223815, 2006-45362, or 2013-173927).

Examples of the commercially available product include, but are not limited to, SHIKO (registered trademark) UV-2750B and UV-7000B (manufactured by The Nippon Synthetic Chemical Industry Co., Ltd.); and NISSO-PB TE Series TEAI-1000 (manufactured by Nippon Soda Co., Ltd.).

The composition of the present invention preferably contains an acid generator for generating a gas from the ethylenic unsaturated monomer having a tert-butoxy group. No particular limitation is imposed on the acid generator, so long as it generates an acid by an external stimulus. The acid generator may be a polymer compound or a low-molecular-weight compound.

As described above, the ethylenic unsaturated monomer having a tert-butoxy group contained in the composition of the present invention can be decomposed by heat in the absence of an acid generator. Thus, the composition does not necessarily contain an acid generator.

Examples of the acid generator include a thermal acid generator and a photoacid generator.

The photoacid generator is preferably a compound that generates no acid (or only a small amount of acid) at the wavelength at which the aforementioned radiation radical polymerization initiator is activated (hereinafter the wavelength may be referred to as the "polymerization initiation wavelength"). If an acid is generated at the polymerization initiation wavelength of the polymerization initiator, gas generation occurs during polymerization of the monomer, resulting in failure to prepare a composition for forming a thin resin film of interest.

The photoacid generator can be appropriately selected from known ones. Examples of the photoacid generator include onium salt derivatives, such as diazonium salts, sulfonium salts, and iodonium salts.

Specific examples of the photoacid generator include aryl diazonium salts, such as phenyldiazonium hexafluorophosphate, 4-methoxyphenyldiazonium hexafluoroantimonate, and 4-methylphenyldiazonium hexafluorophosphate; diaryl iodonium salts, such as diphenyliodonium hexafluoroantimonate, di(4-methylphenyl)iodonium hexafluorophosphate, and di(4-tert-butylphenyl)iodonium hexafluorophosphate; and triaryl sulfonium salts, such as triphenylsulfonium hexafluoroantimonate, tris(4-methoxyphenyl)sulfonium hexafluorophosphate, diphenyl(4-thiophenoxyphenyl)sulfonium hexafluoroantimonate, diphenyl(4-thiophenoxyphenyl)sulfonium hexafluorophosphate, 4,4'-bis(diphenylsulfonio)phenylsulfide-bishexafluoroantimonate, 4,4'-bis(diphenylsulfonio)phenylsulfide-bishexafluorophosphate, thiobis(4,1-phenylene)bis(diphenylsulfonium) bishexafluoroantimonate, 4,4'-bis[di(β-hydroxyethoxy)phenylsulfonio]phenylsulfide-bishexafluoroantimonate, thiobis(4,1-phenylene)bis(di(4-(2-hydroxyethoxy)phenyl)sulfonium) bishexafluoroantimonate, 4,4'-bis[di(β-hydroxyethoxy)phenylsulfonio]phenylsulfide-bishexafluorophosphate, thiobis(4,1-phenylene)bis(di(4-(2-hydroxyethoxy)phenyl)sulfonium) bishexafluorophosphate, (4-(4'-benzoylphenylthio)phenyl)di(4-fluorophenyl)sulfonium hexafluoroantimonate, and (4-(4'-benzoyl)phenylthio)phenyl)di(4-fluorophenyl)sulfonium hexafluorophosphate.

These onium salts may be commercially available products. Specific examples thereof include Sanaid SI-60, SI-80, SI-100, SI-60L, SI-80L, SI-100L, SI-L145, SI-L150, SI-L160, SI-L110, and SI-L147 (manufactured by Sanshin Chemical Industry Co., Ltd.); UVI-6950, UVI-6970, UVI-6974, UVI-6990, and UVI-6992 (manufactured by Union Carbide Corporation); CPI-100P, CPI-100A, CPI-101A, CPI-200K, and CPI-200S (manufactured by San-Apro Ltd.); Adekaoptomer SP-150, SP-151, SP-170, and SP-171 (manufactured by ADEKA Corporation); IRGACURE (registered trademark) 261 (manufactured by BASF Japan); CI-2481, CI-2624, CI-2639, and CI-2064 (manufactured by Nippon Soda Co., Ltd.); CD-1010, CD-1011, and CD-1012 (manufactured by Sartomer); DS-100, DS-101, DAM-101, DAM-102, DAM-105, DAM-201, DSM-301, NAI-100, NAI-101, NAI-105, NAI-106, SI-100, SI-101, SI-105, SI-106, PI-105, NDI-105, BENZOIN TOSYLATE, MBZ-101, MBZ-301, PYR-100, PYR-200, DNB-101, NB-101, NB-201, BBI-101, BBI-102, BBI-103, and BBI-109 (manufactured by Midori Kagaku Co., Ltd.); PCI-061T, PCI-062T, PCI-020T, and PCI-022T (manufactured by Nippon Kayaku Co., Ltd.); IBPF and IBCF (manufactured by Sanwa Chemical Co., Ltd.); and PI2074 (manufactured by Solvay Japan, Ltd. (Rhodia Japan)).

These photoacid generators may be used singly or in combination of two or more species.

The thermal acid generator is preferably a compound that generates no acid (or only a small amount of acid) at the temperature at which the aforementioned thermal radical polymerization initiator is activated (hereinafter the temperature may be referred to as the "polymerization initiation temperature"). If an acid is generated at a temperature equal to or lower than the polymerization initiation temperature of the polymerization initiator, gas generation occurs during polymerization of the monomer, resulting in failure to prepare a composition for forming a thin resin film of interest.

The thermal acid generator can be appropriately selected from known ones. Examples of the thermal acid generator include triarylsulfonium salts, dialkylarylsulfonium salts, and diarylalkylsulfonium salts of non-nucleophilic strong acids; alkylaryliodonium salts and diaryliodonium salts of non-nucleophilic strong acids; and ammonium salts, alkylammonium salts, dialkylammonium salts, trialkylammonium salts, and tetraalkylammonium salts of non-nucleophilic strong acids.

A covalent thermal acid generator may be used. Examples of the covalent thermal acid generator include 2-nitrobenzyl esters of alkyl or aryl sulfonic acids; and other sulfonic acid esters that generate free sulfonic acid through thermal decomposition.

Specific examples thereof include diaryliodonium perfluoroalkyl sulfonate; diaryliodonium tris(fluoroalkylsulfonyl)methide; diaryliodonium bis(fluoroalkylsulfonyl)methide; diaryliodonium bis(fluoroalkylsulfonyl)imide; diaryliodonium quaternary ammonium perfluoroalkyl sulfonate; benzyl tosylates, such as 2-nitrobenzyl tosylate, 2,4-dinitrobenzyl tosylate, 2,6-dinitrobenzyl tosylate, and 4-nitrobenzyl tosylate; cyclohexyl p-toluenesulfonate; benzenesulfonates, such as 2-trifluoromethyl-6-nitrobenzyl 4-chlorobenzenesulfonate and 2-trifluoromethyl-6-nitrobenzyl 4-nitrobenzenesulfonate; phenolic sulfonate esters, such as phenyl 4-methoxybenzenesulfonate; quaternary ammonium tris(fluoroalkylsulfonyl)methide; quaternary alkylammonium bis(fluoroalkylsulfonyl)imide; and alkylammonium salts of organic acids, such as triethylammonium salts of 10-camphorsulfonic acid.

In addition, various aromatic (anthracene, naphthalene, or benzene derivatives) sulfonic acid amine salts may be used. Specific examples thereof include sulfonic acid amine salts described in the specifications of US Patent Nos. 3,474,054, 4,200,729, 4,251,665, and 5,187,019.

These thermal acid generators may be used singly or in combination of two or more species.

In the present invention, the polymerization initiator and acid generator to be used are determined by taking into account that the initiator is a thermal radical polymerization initiator or a radiation radical polymerization initiator, and the acid generator is a thermal acid generator or a photoacid generator.

If a thermal radical polymerization initiator is used in combination with a thermal acid generator, the polymerization initiator and the acid generator are selected by taking into account that the polymerization initiation temperature of the initiator is lower than the temperature at which the acid generator is activated (hereinafter the temperature may be referred to as the "acid generation temperature"). If a photoradical polymerization initiator is used in combination with a photoacid generator, the polymerization initiator and the photoacid generator are selected by taking into account that the polymerization initiation wavelength of the initiator is not equal or approximate to the wavelength at which the acid generator is activated (hereinafter the wavelength may be referred to as the "acid generation wavelength"). Thus, the aforementioned gas generation can be prevented during polymerization of the monomer.

A thermal radical polymerization initiator may be used in combination with a photoacid generator, or a photoradical polymerization initiator may be used in combination with a thermal acid generator. However, such an acid generator is desirably not used in the case where the use of the acid generator could lead to generation of an acid by a stimulus (e.g., heat or light) during polymerization of the monomer.

The composition of the present invention may contain a photoacid generator in combination with a thermal acid generator. Alternatively, the composition of the present invention may contain an acid generator in combination with an acid proliferator.

The composition of the present invention contains a urethane (meth)acrylate compound, and a first polymerizable composition containing an ethylenic unsaturated monomer having a tert-butoxy group and a radical polymerization initiator, or a polymer of a second polymerizable composition containing the ethylenic unsaturated monomer having a tert-butoxy group. The amount of the ethylenic unsaturated monomer having a tert-butoxy group must be 5 mass% or more and less than 95 mass% (preferably 25 mass% or more and less than 95 mass%) with respect to the sum of the amount of the urethane (meth)acrylate compound and the total amount of the monomer(s) contained in the first polymerizable composition or the second polymerizable composition; i.e., the amount of the ethylenic unsaturated monomer having a tert-butoxy group (in the case where the first polymerizable composition or the second polymerizable composition contains only the monomer), the total amount of the ethylenic unsaturated monomer having a tert-butoxy group and an additional ethylenic unsaturated monomer (in the case where the first polymerizable composition or the second polymerizable composition contains these monomers), or the total amount of these two monomers and an additional monomer (in the case where the first polymerizable composition or the second polymerizable composition contains these monomers). If the amount of the ethylenic unsaturated monomer having a tert-butoxy group is less than the aforementioned range, a sufficient amount of gas is not generated even under application of an external stimulus (e.g., heating) to the resultant thin resin film, resulting in failure to achieve excellent removability. If the amount of the ethylenic unsaturated monomer having a tert-butoxy group exceeds the aforementioned range, the resultant cured film tends to become hard and brittle, leading to collapse of the film despite generation of a gas, resulting in failure to achieve removability.

The composition of the present invention may contain a solvent.

The solvent employed in the composition can uniformly dissolve ingredients of the resin composition of the present invention and is inert in reaction with the ingredients.

Specific examples of the solvent include carbonate esters such as ethylene carbonate and propylene carbonate; fatty acids such as caproic acid and caprylic acid; alcohols such as 1-octanol, 1-nonanol, and benzyl alcohol; polyol alkyl ethers such as ethylene glycol monoethyl ether, diethylene glycol monomethyl ether, and propylene glycol monomethyl ether (PGME); polyol alkyl ether acetates such as ethylene glycol ethyl ether acetate and propylene glycol monomethyl ether acetate; polyol aryl ether acetates such as phenyl cellosolve acetate; esters such as ethyl 3-ethoxypropionate, methyl 3-methoxypropionate, ethyl 2-hydroxypropionate, ethyl lactate, and γ-butyrolactone; and ketols such as diacetone alcohol. Notably, these solvents may be used singly or in combination of two or more species.

When the composition of the present invention contains a solvent, the solvent content with respect to the entirety of the composition is preferably less than 30 mass%, from the viewpoint of avoiding an excessively long drying time.

The composition of the present invention may further contain a surfactant, for enhancing applicability, defoaming performance, leveling performance, etc.

Specific examples of the surfactant include fluorine-containing surfactants and silicone-based surfactants. Examples of commercial products thereof include Megafac F142D, F172, F173, F183, and F570 (products of DIC); Fluorad FC-135, FC-170C, FC-430, and FC-431 (products of Sumitomo 3M); Surflon S-112, S-113, S-131, S-141, and S-145 (products of Asahi Glass Co., Ltd.); and SH-28PA, -190, -193, SZ-6032, and SF-8428 (products of Dow Corning Toray).

When the composition of the present invention contains a surfactant, the surfactant content is preferably 5 mass% or less with respect to the entirety of the composition, from the viewpoint of preventing bleed out of the surfactant from the cured film.

The composition of the present invention may further contain a thermal polymerization inhibitor.

Specific examples of the thermal polymerization inhibitor include pyrogallol, benzoquinone, hydroquinone, Methylene Blue, tert-butyl catechol, monobenzyl ether, methylhydroquinone, amylquinone, amyloxyhydroquinone, n-butylphenol, phenol, hydroquinone monopropyl ether, 4,4'-(1-methylethylidene)bis(2-methylphenol), 4,4'-(1-methylehtylidene)bis(2,6-dimethylphenol), 4,4'-[1-[4-(1-(4-hydroxyphenyl)-1-methylethyl)phenyl]ethylidene]bisphenol, 4,4',4''-ethylidenetris(2-methylphenol), 4,4',4''-ethylidenetrisphenol, and 1,1,3-tris(2,5-dimethyl-4-hydroxyphenyl)-3-phenylpropane.

When the composition of the present invention contains a thermal polymerization inhibitor, the thermal polymerization inhibitor content is preferably 50 mass% or less with respect to the radical polymerization initiator, from the viewpoint of preventing a considerable drop in radical polymerization efficiency, to thereby ensure appropriate radical polymerization performance.

The composition of the present invention may further contain a releasing agent, for the purpose of enhancing film peeling performance of the film.

The releasing agent may be any of a wax compound, a silicone compound, and a fluorine-containing compound. Among them, a silicone compound (e.g., silicone oil having a siloxane bonds forming the main backbone, or emulsion thereof) is preferred, from the viewpoints of heat resistance, moisture resistance, and time-over stability.

The releasing agent may be available as a commercial product. Examples of the commercial product include Shin-Etsu Silicone (registered trademark) KF-96-10CS, KF-6012, X-22-2426, and X-22-164E (products of Shin-Etsu Chemical Co., Ltd.); TEGO RAD 2200N, and TEGO RAD 2700 (products of Evonik); and BYK-333 (product of BYK Japan).

When the composition of the present invention contains a releasing agent, the content thereof is preferably 5 mass% or less with respect to the entire amount of the composition, for the purpose of preventing bleed out thereof from the cured film.

The composition of the present invention may further contain other ingredients such as a leveling agent or a defoaming agent.

The composition of the present invention can be prepared through mixing of the following components: a first polymerizable composition containing an ethylenic unsaturated monomer having a tert-butoxy group, an optionally incorporated additional ethylenic unsaturated monomer, and a radical polymerization initiator, or a polymer prepared from a second polymerizable compound containing an ethylenic unsaturated monomer having a tert-butoxy group, an optionally incorporated additional ethylenic unsaturated monomer, and a radical polymerization initiator; an urethane (meth)acrylate compound; and an additional component (e.g., an acid generator).

For example, these components are added in specific amounts to a tank made of stainless steel (SUS) and equipped with a stirring blade, and the resultant mixture is stirred at room temperature (about 25°C) or under heating until homogeneity is achieved. In this case, the acid generator or the polymerization initiator (i.e., a raw material that is expected to cause undesired side effects (e.g., decomposition) if a required amount thereof is added to the tank at one time) is preferably added in several portions.

If necessary, the composition prepared through mixing of these components may be filtered by means of, for example, a mesh or a membrane filter.

The composition is prepared by taking into account that the amount of the ethylenic unsaturated monomer having a tert-butoxy group necessarily falls within the aforementioned specific range. In the case where a component contained in the composition also functions as another component, the amounts of the components need to be determined in consideration of the functions thereof.

The thus-prepared composition of the present invention generally has a viscosity of 100 to 10,000 cP.

The composition for forming an easy-to-detach thin resin film of the present invention described above is applied to the surface of a coating target. If the composition contains the aforementioned monomer, the composition is cured with optional elimination of the solvent. If the composition contains the aforementioned polymer, the solvent is eliminated under heating. The easy-to-detach thin resin film of the present invention is thereby formed.

Examples of the coating target include, but are not limited to, general-purpose substrates, such as a metal substrate made of, for example, aluminum, copper, titanium, or an alloy thereof, a glass substrate made of, for example, soda glass, and a resin substrate made of, for example, polyimide. Other examples of the coating target include various products, and parts and members thereof.

The composition is applied to the coating target by any process. Examples of the process include, but are not limited to, spin coating, slit coating, roll coating, screen printing, the applicator process, over coating, spraying, ink-jetting, and the dispenser process.

The thin resin film generally has a thickness of 1 to 2,000 µm. In order to secure the sufficient removability of the cured film, the thickness is preferably 50 to 1,500 µm, more preferably 100 to 500 µm.

The thickness is varied by, for example, changing the concentration of a component contained in the composition for forming the thin resin film or changing the amount of the composition applied onto the substrate.

The coating film on the coating target is cured by initiating the polymerization of the monomer with the polymerization initiator through photoirradiation and/or heating.

The photoirradiation for curing is carried out by means of, for example, a low-pressure mercury lamp, a high-pressure mercury lamp, an ultrahigh-pressure mercury lamp, a metal halide lamp, or an argon gas laser in consideration of, for example, the polymerization initiation wavelength of the polymerization initiator, the acid generation wavelength of the acid generator, the types and amounts of other components contained in the composition, and the thickness of the coating film. For example, in the case where a high-pressure mercury lamp is used, the dose is adjusted to 100 to 1,500 mJ/cm².

The heating for curing is carried out by means of a heating apparatus (e.g., a hot plate or an oven) in consideration of, for example, the polymerization initiation temperature of the polymerization initiator, the acid generation temperature of the acid generator, the types and amounts of other components contained in the composition, and the thickness of the coating film. The heating temperature is generally 50 to 200°C, and the heating period is generally three minutes to one hour. The heating for elimination of the solvent is carried out in the same manner as described above.

The thin resin film formed through curing of the coating film or elimination of the solvent therefrom exhibits high adhesion to the coating target, and also exhibits chemical resistance (e.g., resistance to an acid, an alkali, or an organic solvent) and physical resistance (e.g., resistance to sputtering of, for example, ITO or a metal, vacuum conditions for sputtering, scratching, or collision). When the thin resin film is subjected to an external stimulus (e.g., photoirradiation or heating), the thin film is decomposed and exhibits reduced adhesion to the coating target. The resultant thin film can be easily removed from the coating target.

No particular limitation is imposed on the external stimulus that causes the decomposition of the film, so long as the stimulus can generate an acid from the photoacid generator, resulting in generation of a gas from the tert-butoxy group. The external stimulus is generally photoirradiation or heating.

The photoirradiation for generating an acid from the photoacid generator is carried out by means of, for example, a low-pressure mercury lamp, a high-pressure mercury lamp, an ultrahigh-pressure mercury lamp, a metal halide lamp, or an argon gas laser in consideration of, for example, the initiation wavelength of the polymerization initiator and the acid generator, the types and amounts of other components contained in the composition, and the thickness of the coating film. For example, in the case where a high-pressure mercury lamp is used, the dose is adjusted to 100 to 1,500 mJ/cm².

The heating for generating an acid from the photoacid generator is carried out by means of a heating apparatus (e.g., a hot plate or an oven) in consideration of, for example, the initiation temperature of the polymerization initiator and the acid generator, the types and amounts of other components contained in the composition, and the thickness of the coating film. The heating temperature is generally 50 to 200°C, and the heating period is generally 1 to 30 minutes.

The thin film, which is easily removable, can be removed through a relatively simple process by means of, for example, fingers, tweezers, or airflow.

In particular, when the easily removable thin resin film of the present invention is formed on the coating target (substrate) in the absence of, for example, a shield on the thin film, the film is self-removed from the substrate through, for example, curling by an external stimulus. In such a case, the film can be more easily removed.

The thin film may be removed from the coating target by means of a remover (e.g., an organic solvent or water), so long as the remover does not cause a problem (e.g., erosion of the surface of a portion of the coating target on which the thin film is not formed).

By virtue of its characteristics, the above-described easy-to-detach thin resin film of the present invention is particularly suitable for use as a temporary adhesive film or a temporary protective film.

Specifically, the easy-to-detach thin resin film of the present invention is envisaged for use as a temporary adhesive film for temporarily fixing two articles (e.g., a substrate and a coating or vapor deposition film formed thereon) in the following case: for example, the case where the surfaces of two articles (e.g., a substrate and a coating or vapor deposition film formed thereon) are attached to each other during production, processing, or repair of any product (e.g., a vehicle, a computer, a piece of furniture, a sporting product, a building material, or an electronic device) and parts or members thereof, the attached two articles are subjected to a necessary treatment (e.g., acid treatment, alkali treatment, solvent treatment, gas treatment, photoirradiation treatment, thermal treatment, or sputtering treatment) for the purpose of, for example, washing or processing, and then the two articles are separated from each other; or the case where the surfaces of two articles (e.g., a substrate and a coating or vapor deposition film formed thereon) are attached to each other during conveyance of the aforementioned product and parts thereof, and the two articles are conveyed and then separated from each other after the conveyance.

The easy-to-detach thin resin film of the present invention is also envisaged for use as a protective film for chemically or physically protecting an article in the following case: for example, the case where the surfaces of two articles (e.g., a substrate and a coating or vapor deposition film formed thereon) are attached to each other during production, processing, repair, conveyance, or storage of the aforementioned product and parts or members thereof, and the attached two articles are subjected to a necessary treatment (e.g., acid treatment, alkali treatment, solvent treatment, gas treatment, photoirradiation treatment, thermal treatment, or sputtering treatment) for the purpose of, for example, washing or processing; the case where the aforementioned various products and parts thereof are conveyed; or the case where the aforementioned product and parts thereof are brought into contact with, for example, a sharp article, a color-transferable article, or a corrosive or contaminating substance (e.g., microparticles in air or acid rain) caused by exhaust gas from vehicles or smoke from plants.

The composition for forming an easy-to-detach thin resin film of the present invention is used for formation of a specific pattern on, for example, a substrate through the following procedure: the composition is applied to the substrate via a masking, to thereby form a patterned easy-to-detach thin resin film of the present invention, the substrate is subjected to, for example, alkali treatment, solvent treatment, gas treatment, photoirradiation treatment, thermal treatment, or sputtering treatment via the patterned easy-to-detach thin resin film, and then the film is removed by an external stimulus (e.g., heat).

### Examples

The present invention will next be described in detail by way of examples, which should not be construed as limiting the invention thereto.

### (1) Preparation of composition

### [Examples 1-1 to 1-5 and Comparative Examples 1-1 to 1-3]

Raw materials other than SI-100L were weighed (in mass proportions shown in Table 1) and added to a glass sample vial. The raw materials were mixed with stirring by means of a magnetic stirrer under heating at about 50°C until homogeneity was achieved. Subsequently, SI-100L was weighed (in an amount shown in Table 1) and added to the same sample vial, and the resultant mixture was stirred by means of a magnetic stirrer at 25°C (room temperature) until homogeneity was achieved, to thereby prepare a composition. The mixing process is divided into two parts as described above for the purpose of preventing decomposition of SI-100L, which is a thermal acid generator.

**[Table 1]**

| | TBA | t-Boc St | IBXA | LA | UV-7000B | TEAI-1000 | Irg. 1173 | SI-100L |
|---|---|---|---|---|---|---|---|---|
| Ex. 1-1 | 1.4 | | | | 1.4 | | 0.3 | 0.1 |
| Ex. 1-2 | 2.0 | | | | 3.0 | | 0.3 | 0.3 |
| Ex. 1-3 | 1.5 | | | | 3.0 | | 0.2 | 0.2 |
| Ex. 1-4 | 1.5 | | | | | 3.0 | 0.2 | 0.2 |
| Ex. 1-5 | | 3.0 | | | 2.0 | | 0.3 | 0.1 |
| Comp. Ex. 1-1 | | | 1.5 | | 3.0 | | 0.2 | 0.2 |
| Comp. Ex. 1-2 | | | | 1.5 | 3.0 | | 0.2 | 0.2 |
| Comp. Ex. 1-3 | | 2.0 | | | | | 0.1 | 0.1 |

| | | | | | | | | |
|---|---|---|---|---|---|---|---|---|
| TBA: tert-butyl acrylate, manufactured by Tokyo Chemical Industry Co., Ltd. t-Boc St: tert-butyl p-vinylphenyl carbonate, manufactured by Aldrich IBXA: isobornyl acrylate, manufactured by Tokyo Chemical Industry Co., Ltd. LA: lauryl acrylate, manufactured by Tokyo Chemical Industry Co., Ltd. Irg. 1173: Irgacure 1173, manufactured by BASF SI-100L: SI-100L, manufactured by Sanshin Chemical Industry Co., Ltd. UV-7000B: urethane acrylate, manufactured by The Nippon Synthetic Chemical Industry Co., Ltd. TEAI-1000: urethane acrylate, manufactured by Nippon Soda Co., Ltd. | | | | | | | | |

### [Examples 2-1 to 2-13]

Raw materials other than SI-60L, SI-80L, SI-100L, or SI-150L were weighed (in mass proportions shown in Table 1) and added to a glass sample vial. The raw materials were mixed with stirring by means of a magnetic stirrer under heating at about 50°C until homogeneity was achieved. Subsequently, SI-60L, SI-80L, SI-100L, or SI-150L was weighed (in an amount shown in Table 1) and added to the same sample vial, and the resultant mixture was stirred by means of a magnetic stirrer at 25°C (room temperature) until homogeneity was achieved, to thereby prepare a composition. The mixing process is divided into two parts as described above for the purpose of preventing decomposition of SI-100, etc., which is a thermal acid generator.

**[Table 2]**

| | UV-7000B | TEAI-1000 | TBA | t-Boc St | Irg. 1173 | SI-60L | SI-80L | SI-100L | SI-150L |
|---|---|---|---|---|---|---|---|---|---|
| Ex. 2-1 | 1.3 | | 0.6 | | 0.1 | 0.1 | | | |
| Ex. 2-2 | 1.3 | | 0.6 | | 0.1 | | 0.1 | | |
| Ex. 2-3 | 1.3 | | 0.6 | | 0.1 | | | 0.1 | |
| Ex. 2-4 | 1.3 | | 0.6 | | 0.1 | | | | 0.1 |
| Ex. 2-5 | 1.3 | | 0.6 | | 0.1 | | | | |
| Ex. 2-6 | 1.3 | | | 0.6 | 0.1 | 0.1 | | | |
| Ex. 2-7 | 1.3 | | | 0.6 | 0.1 | | 0.1 | | |
| Ex. 2-8 | 1.3 | | | 0.6 | 0.1 | | | 0.1 | |
| Ex. 2-9 | 1.3 | | | 0.6 | 0.1 | | | | 0.1 |
| Ex. 2-10 | 1.3 | | | 0.6 | 0.1 | | | | |
| Ex. 2-11 | 1.3 | | | 0.14 | 0.07 | | | 0.07 | 0.1 |
| Ex. 2-12 | 1.3 | | | 0.33 | 0.08 | | | 0.08 | |
| Ex. 2-13 | | 1.3 | 0.6 | | 0.1 | | | 0.1 | |

| | | | | | | | | | |
|---|---|---|---|---|---|---|---|---|---|
| TBA: tert-butyl acrylate, manufactured by Tokyo Chemical Industry_ Co., Ltd. t-Boc St: tert-butyl -p-vinylphenyl carbonate, manufactured by Aldrich UV-7000B: urethane acrylate, manufactured by The Nippon Synthetic Chemical Industry Co., Ltd. TEAI-1000: urethane acrylate, manufactured by Nippon Soda Co., Ltd. Irg. 1173: Irgacure 1173, manufactured by BASF SI-60L: SI-60L, manufactured by Sanshin Chemical Industry Co., Ltd. SI-80L: SI-80L, manufactured by Sanshin Chemical Industry Co., Ltd. SI-100L: SI-100L, manufactured by Sanshin Chemical Industry Co., Ltd. SI-150L: SI-150L, manufactured by Sanshin Chemical Industry Co., Ltd. | | | | | | | | | |

### (2) Formation and evaluation of thin resin film

### [Examples 1-6 to 1-10 and Comparative Examples 1-4 to 1-6]

### (2-1) Formation of cured film and glass laminate and evaluation of curability

Two soda glass substrates having different sizes were provided (i.e., a glass substrate having dimensions of 100 mm by 100 mm (hereinafter will be referred to as a "glass substrate A"), and a glass substrate having dimensions of 25 mm by 25 mm (hereinafter will be referred to as a "glass substrate B")).

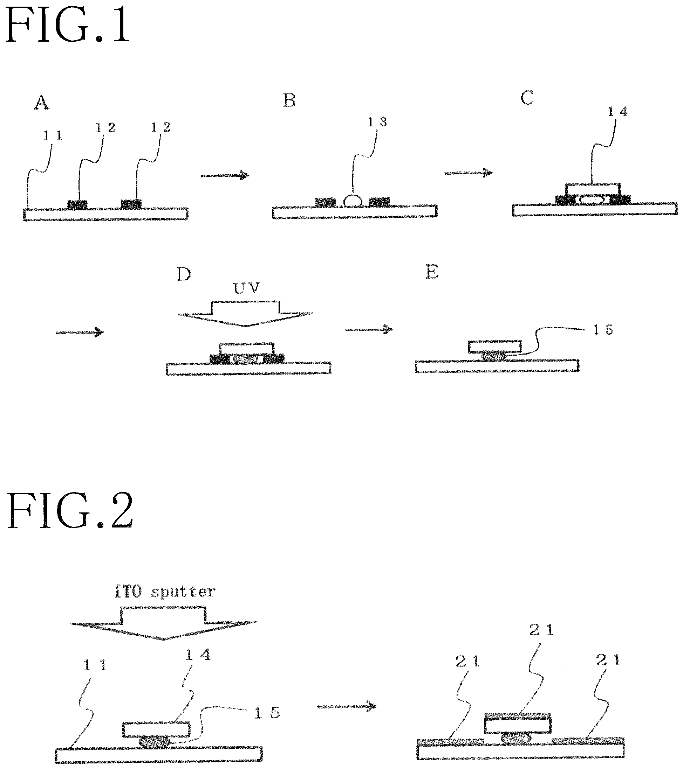

Two silicone rubber spacers 12 (500 µm) were placed on a glass substrate A 11 (Fig. 1-A), a composition 13 of each of Examples 1-1 to 1-5 and Comparative Examples 1-1 to 1-3 was dropped between the spacers (Fig. 1-B), and a glass substrate B 14 was placed on the spacers so as to sandwich the composition between these glass substrates (Fig. 1-C). The resultant product was irradiated with UV light (intensity: 50 mW/cm², dose: 500 mJ/cm²), to thereby cure the composition (Fig. 1-D). Thereafter, the silicone rubber spacers were eliminated, to thereby form a glass laminate including a cured film 15 (thickness: 500 µm) sandwiched between the two glass substrates (the cured film 15 having a circular shape with a diameter of about 10 mm) (Fig. 1-E). In each example, the composition was cured (i.e., good curability). The resultant glass laminate was evaluated as described below (note: some evaluations were omitted in the Comparative Examples).

### (2-2) Evaluation of adhesion

The glass substrates of the glass laminate were pulled by hands for evaluation of adhesion. Rating "A" was given in the case where the substrates were strongly bonded, and rating "C" was given in the case where the substrates were easily separated from each other.

### (2-3) Evaluation of removability by heating

The glass laminate was placed on a hot plate and heated at 150°C. Rating "A" was given in the case where the cured film was separated from the glass substrates within 5 minutes, and rating "C" was given in the case where the cured film was not removed even after heating for more than 5 minutes up to 10 minutes.

### (2-4) Evaluation of sputtering resistance and reduced pressure resistance

Sputtering was performed on the glass substrate B of the glass laminate, to thereby form an ITO film 21 on the glass substrate (Fig. 2). The ITO film was formed by means of SRS-700T/LL (manufactured by Sanyu Electron Co., Ltd.) (conditions: thickness: 90 nm, temp: RT, offset: 50 mm, Ts distance: 100 mm, rotation: 2 rpm, DC: 80 W, Ar: 46 sccm, O₂: 1 sccm, 1.0 Pa, time: 5min).

Thereafter, the glass laminate having the ITO film 21 formed thereon was placed on a hot plate and heated at 150°C. The glass laminate was evaluated in the same manner as in the glass laminate having no ITO film 21 thereon. Specifically, rating "A" was given in the case where the cured film was removed from the glass substrates within 5 minutes, and rating "C" was given in the case where the cured film was not removed even after heating for more than 5 minutes up to 10 minutes.

The results of the aforementioned evaluations are illustrated in Table 3.

**[Table 3]**

| | Amount of ethylenic unsaturated monomer having tert-butoxy group (%) | Curability | Adhesion | Removability by heating | Sputtering resistance and reduced pressure resistance |
|---|---|---|---|---|---|
| Ex. 1-6 | 50 | A | A | A | A |
| Ex. 1-7 | 40 | A | A | A | A |
| Ex. 1-8 | 33 | A | A | A | A |
| Ex. 1-9 | 33 | A | A | A | A |
| Ex. 1-10 | 60 | A | A | A | A |
| Comp. Ex. 1-4 | 0 | A | A | C | - |
| Comp. Ex. 1-5 | 0 | A | A | C | - |
| Comp. Ex. 1-6 | 100 | A | A | C | - |

In the Examples and Comparative Examples, all the compositions exhibited excellent curability, and the cured films formed from the compositions exhibited high adhesion to a substrate.

The cured films (Examples 1-6 to 1-10) formed from the compositions of Examples 1-1 to 1-5 exhibited reduced adhesion by heating, and were easily removed from the glass substrates. In addition, the cured films exhibited high adhesion and removability even after the ITO sputtering treatment under vacuum. In contrast, the cured films of the Comparative Examples exhibited no removability after heating. The reason why the cured films of the Comparative Examples exhibited poor removability is inferred as follows.

In Comparative Examples 1-4 and 1-5, the amount of the compound having a tert-butoxy group was less than 5 mass%, which is lower than the range specified by the present invention. Thus, a sufficient amount of gas was not generated through heating, and the film was not sufficiently decomposed, resulting in no removability.

In Comparative Example 1-6, the amount of the compound having a tert-butoxy group was 100%, which exceeds the range specified by the present invention. In this case, a sufficient amount of gas was expected to be generated by heating, and gas generation was actually determined through observation of the foaming of the cured film. However, the foaming occurred in a portion of the film, and the portion collapsed and separated from the cured film. Thus, the entire cured film maintained a strong adhesive force, and the cured film failed to be removed from the substrates. Since the film of Comparative Example 1-6 formed from a polymer composed only of tert-butyl acrylate was hard and brittle, a stress caused by gas generation did not propagate throughout the film. Therefore, the thin film was determined to be unusable as, for example, a temporary fixing material.

### (2-5) Evaluation of adhesive force and peel force

In addition to the aforementioned evaluation of adhesion, the glass laminate of Example 1-8 or 1-9 was evaluated for the adhesive force and peel force between the cured film and the glass substrates.

The glass substrate A of the glass laminate of Example 1-8 or 1-9 was fixed, and a paper tape was attached to the glass substrate B by means of a double-sided tape (Nice Tack Rimuka, manufactured by Nichiban Co., Ltd.). The paper tape was fixed with a chuck and pulled at a tensile rate of 10 mm/min, to thereby determine an adhesive force. The adhesive force was determined by means of a desktop precision universal tester Autograph AGS-X (manufactured by Shimadzu Corporation).

In the case of each glass laminate, the glass substrate was not removed from the cured film, but the double-sided tape was removed. The results suggest that the adhesive force of the cured product of the present invention to the glass substrate is equal to or higher than the adhesive force (1.2 N/cm²) of the double-sided tape. Thus, the cured film of the present invention, which has such a high adhesive force, is suitable for use as a thin film for temporarily fixing substrates (e.g., glass substrates).

Subsequently, the glass laminate of Example 1-8 or 1-9 was placed on a hot plate and heated at 150°C for five minutes, and the adhesive force was determined in the same manner as described above.

In the case of each glass laminate, the cured film was removed from the glass substrates, and the adhesive force was determined to be less than 0.5 N/cm². Thus, the adhesive force of the thin resin film (cured film) of the present invention was determined to drastically decrease by heating.

As described above, the cured film formed from the composition of the present invention exhibits good adhesion to, for example, a glass substrate, and the film can be easily removed from the substrate through a reduction in adhesive force by heating (i.e., a simple process). Thus, the cured film is suitable for use as a temporary adhesive film for temporarily bonding substrates (e.g., glass or metal substrates).

### (3) Evaluation of self-removal by heating

### (3-1) Self-removal from glass substrate

### [Examples 1-11 and 1-12]

The composition of Example 1-3 or 1-4 was applied onto the glass substrate A by means of an applicator and then irradiated with UV light (intensity: 50 mW/cm², dose: 500 mJ/cm²), to thereby form a cured film having a thickness of about 500 µm, a width of about 7 mm, and a length of about 50 mm.

Although an attempt was made to remove the resultant cured film by fingers, the cured film was not removed from the glass substrate because of strong adhesion therebetween.

The cured-film-coated glass substrate was placed on a hot plate so that the glass substrate came into contact with the hot plate, and then heated at 150°C. As a result, the cured film was curled on the glass substrate and removed therefrom within two minutes. Thus, the cured film was determined to be self-removed by heating.

As described above, the cured film formed from the composition of the present invention exhibits good adhesion to, for example, a glass substrate, and the film can be easily removed from the substrate through a reduction in adhesive force by heating (i.e., a simple process). In particular, in the absence of a shield on the cured film, the film is self-removed from the substrate or the like through, for example, curling. Thus, the cured film is suitable for use as a film for protecting the surface of an article (e.g., a substrate made of, for example, glass or metal).

### [Examples 2-14 to 2-25]

The procedure of Example 1-11 was repeated, except that the composition of Example 1-3 was replaced with the composition of each of Examples 2-1 to 2-12, to thereby form a cured film (thickness: about 800 µm) on a glass substrate.

Although an attempt was made to remove the resultant cured film by fingers, the cured film was not removed from the glass substrate because of strong adhesion therebetween.

The cured-film-coated glass substrate was placed on a hot plate so that the glass substrate came into contact with the hot plate, and then heated at temperatures shown in Table 4. There was measured the time (seconds) until the removal of the cured film from the glass substrate at each heating temperature. The results are illustrated in Table 4. Rating "np" was given in the case where the removal was not determined even after five-minute heating. In some examples, the evaluation was performed only at some heating temperatures.

**[Table 4]**

| | 80°C | 120°C | 150°C | 200°C | 220°C | 250°C | 300°C |
|---|---|---|---|---|---|---|---|
| Ex. 2-14 | np | 90 | 50 | 35 | 25 | | |
| Ex. 2-15 | np | 175 | 50 | 35 | 20 | | |
| Ex. 2-16 | np | 300 | 70 | 35 | 30 | | |
| Ex. 2-17 | np | np | np | 120 | 90 | | |
| Ex. 2-18 | np | np | np | np | np | 4,800 | 120 |
| Ex. 2-19 | np | 60 | 70 | 30 | 25 | | |
| Ex. 2-20 | np | 120 | 80 | 45 | 30 | | |
| Ex. 2-21 | np | 210 | 120 | 50 | 50 | | |
| Ex. 2-22 | np | np | 230 | 80 | 80 | | |
| Ex. 2-23 | np | np | 230 | 150 | 130 | | |
| Ex. 2-24 | | | 60 | | | | |
| Ex. 2-25 | | | 50 | | | | |

According to the data from the manufacturer, the temperature required for generation of an acid from a thermal acid generator is as follows: SI-150L (highest) > SI-100L > SI-80L > SI-60L. As illustrated in Table 4, the appropriate selection of a thermal acid generator in accordance with the target removal temperature can control the removal temperature and the time until occurrence of the removal. The thermal acid generator plays a role in promoting the decomposition of the ethylenic unsaturated monomer having a tert-butoxy group by the generated acid.

As illustrated in Examples 2-18 and 2-23, the ethylenic unsaturated monomer having a tert-butoxy group can be decomposed by heat even in the absence of the thermal acid generator, thereby achieving the removal of the film. However, in Example 2-18, unwanted changes (e.g., an increase in hardness of the film and cracking) occurred in parallel with the removal of the film. Such a problem is attributed to low thermal resistance of the urethane acrylate resin. Thus, a urethane acrylate resin having higher thermal resistance is desirably used.

The decomposition of TBA by an acid causes the elimination of a tert-butoxy group, and the decomposition of t-Boc St by an acid causes the elimination of a tert-butoxy group and a carbonyl group. Thus, the amount of t-Boc St required for achievement of removability is smaller than that of TBA. In Example 2-24 or 2-25, good removability was achieved although the amount of the ethylenic unsaturated monomer having a tert-butoxy group was 10% (Example 2-24) or 20% (Example 2-25) with respect to the total mass of the urethane (meth)acrylate compounds.

### (3-2) Self-removal from metal substrate

### [Examples 2-26 and 2-27]

The procedure of Example 1-11 was repeated, except that the composition of Example 1-3 was replaced with the composition of Example 2-3, and the glass substrate was replaced with a stainless steel substrate (Example 2-26) or with an aluminum substrate (Example 2-27), to thereby form a cured film on the substrate.

Although an attempt was made to remove the resultant cured film by fingers, the cured film was not removed from the metal substrate because of strong adhesion therebetween.

The cured-film-coated metal substrate was placed on a hot plate so that the metal substrate came into contact with the hot plate, and then heated at 200°C. As a result, the cured film was curled on the metal substrate and removed therefrom within two minutes. Thus, the cured film was determined to be self-removed from the metal substrate by heating.

### (4) Evaluation of chemical resistance

### [Examples 2-28 and 2-29]

The procedure of Example 1-6 was repeated, except that the composition of Example 1-1 was replaced with the composition of Example 2-3 or 2-13, to thereby form a glass laminate. In each example, the composition was cured (i.e., good curability).

Subsequently, each glass laminate was immersed in 10 mass% aqueous hydrofluoric acid solution at 25°C for 60 minutes, to thereby etch the glass substrate. The etched glass laminate was washed with water, and then an attempt was made to pull the glass substrates of the glass laminate away from each other for removing the cured film from the glass substrates. However, the cured film was not removed from the glass substrates because of strong adhesion therebetween. Thereafter, the glass laminate was placed on a hot plate and heated at 150°C. As a result, the cured film was removed from the glass substrates within two minutes.

As described above, the cured film was determined not to be degraded with a highly permeable acid (e.g., hydrofluoric acid), and to be self-removed by heating. Thus, the thin film formed from the composition of the present invention can be used as a temporary fixing material suitable for a glass etching process.

### Description of Reference Numerals

- 11:: Glass substrate A
- 12:: Spacer
- 13:: Composition of Examples or Comparative Examples
- 14:: Glass substrate B
- 15:: Cured film (thin resin film)
- 21:: ITO film

## Claims

1. A composition for forming an easy-to-detach thin resin film, the composition being **characterized by** comprising:
a urethane (meth)acrylate compound, and
a first polymerizable composition containing an ethylenic unsaturated monomer having a tert-butoxy group and a radical polymerization initiator, or a polymer of a second polymerizable composition containing the ethylenic unsaturated monomer having a tert-butoxy group,
wherein the amount of the ethylenic unsaturated monomer having a tert-butoxy group is 5 mass% or more and less than 95 mass% with respect to the sum of the amount of the urethane (meth)acrylate compound and the total amount of the monomer(s) contained in the first polymerizable composition or the second polymerizable composition.

2. A composition for forming an easy-to-detach thin resin film according to claim 1, wherein the ethylenic unsaturated monomer having a tert-butoxy group contains at least one species selected from the group consisting of compounds represented by the following formulae (T1) to (T3): 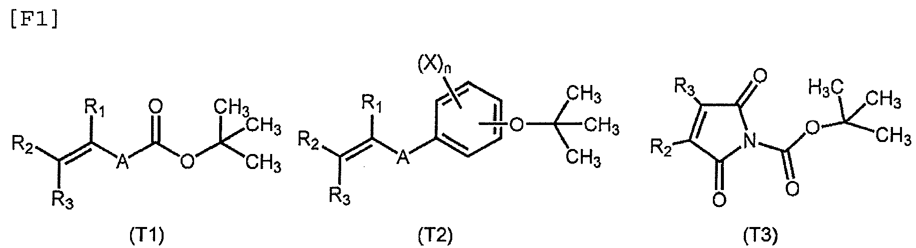
(where R₁ represents a hydrogen atom, a cyano group, a methyl group, an ethyl group, an n-propyl group, or an isopropyl group;
R₂ and R₃ each independently represent a hydrogen atom or a C1 to C10 alkyl group;
A represents a single bond, an ether group (-O-), a carbonyl group (-CO-), an amido group (-CONH-), a C1 to C12 alkylene group, a C6 to C16 arylene group, or a C3 to C12 heteroarylene group;
X represents a halogen atom, a cyano group, a nitro group, a C1 to C10 alkyl group, or a C1 to C10 haloalkyl group; and
n is an integer from 0 to 4, which corresponds to the number of substituents X on the benzene ring).

3. A composition for forming an easy-to-detach thin resin film according to claim 1, wherein the ethylenic unsaturated monomer having a tert-butoxy group contains tert-butyl (meth)acrylate.

4. A composition for forming an easy-to-detach thin resin film according to any one of claims 1 to 3, wherein the radical polymerization initiator is a radiation radical polymerization initiator.

5. A composition for forming an easy-to-detach thin resin film according to any one of claims 1 to 4, which further comprises an acid generator.

6. A composition for forming an easy-to-detach thin resin film according to claim 5, wherein the acid generator is a thermal acid generator.

7. A composition for forming an easy-to-detach thin resin film according to any one of claims 1 to 6, wherein the first polymerizable composition or the second polymerizable composition further contains an additional ethylenic unsaturated monomer in addition to the ethylenic unsaturated monomer having a tert-butoxy group.

8. A composition for forming an easy-to-detach thin resin film according claim 7, wherein the amount of the ethylenic unsaturated monomer having a tert-butoxy group is 60 mol% or more with respect to the total amount of the ethylenic unsaturated monomer having a tert-butoxy group and the additional ethylenic unsaturated monomer.

9. An easy-to-detach thin resin film produced from a composition for forming an easy-to-detach thin resin film as recited in any one of claims 1 to 8.

10. An adhesive film comprising an easy-to-detach thin resin film as recited in claim 9.

11. An article comprising an adhesive film as recited in claim 10.

12. A substrate laminate comprising two substrates, and an adhesive film as recited in claim 10 disposed between the substrates.

13. A method for bonding two or more articles with an adhesive film as recited in claim 10.

14. A protective film comprising an easy-to-detach thin resin film as recited in claim 9.

15. An article comprising a protective film as recited in claim 14.

16. A method for protecting the surface of an article with a protective film as recited in claim 14.
